Europäisches Patentamt

European Patent Office

Office européen des brevets

(19)

(11) Numéro de publication: **0015889**
**A1**

# DEMANDE DE BREVET EUROPEEN

(21) Numéro de dépôt: **80870017.3**

(22) Date de dépôt: **07.03.80**

(51) Int. Cl.³: **F 16 D 66/02**

(30) Priorité: **09.03.79 DE 2909247**

(43) Date de publication de la demande: **17.09.80**
**Bulletin 80/19**

(84) Etats contractants désignés: **AT BE CH FR GB IT LU NL**

(71) Demandeur: **DON INTERNATIONAL S.A. Société Anonyme, 95/97 Chaussée de Nivelles, B-6538 Manage (BE)**

(72) Inventeur: **Mende, Hermann Maria, Karl-Peters-Strasse 45, 62 Wiesbaden (DE)**

(74) Mandataire: **Plucker, Guy, OFFICE KIRKPATRICK 4 Square de Meeûs, B-1040 Bruxelles (BE)**

(54) **Indication d'usure pour garnitures de frein.**

(57) Dispositif servant à produire un signal de mesure pour indiquer l'usure d'une garniture de frein qui est fixée sur une mâchoire de frein au moyen de rivets, les rivets, noyés dans la garniture de frein, étant posés sur la plage de rivetage. Le capteur de ce dispositif comprend un rivet (4) dans lequel est prévue, près de sa tête (9), une partie de contact (10) qui est maintenue dans une masse de matière isolante (11) et l'extrémité supérieure (12) de la partie de contact (10) fait saillie au-dessus de la tête (9) du rivet et est couverte par la masse de matière isolante (11).

ACTORUM AG

EP 0 015 889 A1

La présente invention concerne un dispositif servant à produire un signal de mesure pour indiquer l'usure d'une garniture de frein qui est fixée sur une mâchoire de frein au moyen de rivets, les rivets noyés dans la garniture de frein étant posés sur la plage de rivetage.

Le frein à tambour connu comporte deux mâchoires de frein sur lesquelles des garnitures de frein de forme adaptée peuvent être fixées de la manière décrite plus haut au moyen de rivets.

L'invention a pour but de procurer un dispositif du type spécifié dans le préambule qui permette une fabrication économique se prêtant même éventuellement à une production en masse et qui fournisse une indication fiable lorsque la garniture atteint un degré d'usure déterminé.

A cet effet, suivant l'invention, le capteur comprend un rivet dans lequel est prévue près de sa tête, une partie de contact qui est maintenue dans une masse de matière isolante et l'extrémité supérieure de la partie de contact fait saillie au-dessus de la tête du rivet et est couverte par la masse de matière isolante. Les rivets spéciaux ayant la forme de capteurs sont avantageusement fabriqués aux dimensions normalisées des rivets utilisés pour la fixation de garnitures de frein sur des mâchoires de frein. Le rivet spécial conforme à l'invention peut alors en effet être traité par la même riveteuse que celle qui assure la fixation de la garniture de frein sur les mâchoires de frein.

Un ou deux rivets capteurs conformes à l'invention sont de préférence prévus par mâchoire et le plus avantageusement sur la mâchoire primaire à l'endroit où la matière est la plus épaisse, parce que c'est à cet endroit aussi que l'usure est la plus forte. La partie de contact peut être entièrement ou pour partie en métal et peut être connectée au pôle positif d'un circuit électrique correspondant. Une lampe sur le tableau de bord du véhicule s'allume lorsque la garniture de frein est usée au point que le recouvrement par la masse de matière isolante de l'extrémité supérieure de la partie de contact est éliminé et que le tambour de frein connecté au pôle négatif du circuit électrique vient alors en contact avec l'extrémité supérieure de la partie de contact.

Il est particulièrement avantageux pour la fabrication que, suivant l'invention, la partie de contact soit en métal, ait la forme en substance d'un cylindre présentant un diamètre inférieur au diamètre intérieur du rivet et comporte, à son extrémité inférieure opposée à la tête du rivet, des moyens de connexion électriques. Le cylindre métallique peut alors être agencé à l'intérieur du rivet spécial conforme à l'invention d'une manière telle qu'il ne vienne pas en contact avec les parois métalliques internes du rivet dont il est séparé électriquement par la masse de matière isolante mais, qu'à son extrémité supérieure, il dépasse d'environ 1 à 2 mm du rivet. Cette extrémité saillante est cependant à nouveau coiffée par la masse de matière isolante de recouvrement. Dans le trou prévu dans la garniture de frein se forme en effet en service, de la poussière plus ou moins conductrice de l'électricité, par exemple parce qu'elle est mélangée à des particules métalliques. Si le recouvrement de l'extrémité supérieure de la partie de contact par la masse de matière isolante n'était pas prévu, la lampe témoin sur le tableau de bord du véhicule pourrait indiquer d'une manière erronée l'état d'usure défini alors que la garniture de frein n'est pas encore suffisamment usée, parce que le circuit allant du tambour négatif à la partie de contact positive serait fermé par l'intermédiaire de la poussière conductrice accumulée dans le trou de la garniture de frein.

Dans une autre réalisation avantageuse de l'invention, la partie de contact a la forme d'une douille métallique dans l'extrémité inférieure de laquelle est prévu un pas de vis. Cette forme d'exécution présente des avantages techniques de fabrication étant donné que le trou traversant la douille métallique n'influence en aucune manière la fonction du capteur conforme à l'invention. A l'extrémité opposée à l'extrémité supérieure de la douille métallique, on peut visser les moyens de connexion les plus variés au moyen du pas de vis.

Suivant l'invention, il est en outre prévu que par exemple le moyen de connexion électrique, à l'extrémité inférieure de la partie de contact, présente un adaptateur ayant la forme d'une broche dont une extrémité (supérieure) est pourvue d'un pas de vis extérieur et dont l'autre extrémité (inférieure) est pourvue d'une connexion électrique. Le rivet peut de cette façon être fabriqué avec la masse de matière isolante et avec la partie de contact sans qu'un câble de connexion pénétrant dans le rivet par le bas gêne la fabrication. Pour connecter le câble de manière efficace, on peut utiliser l'adaptateur décrit plus haut.

Suivant l'invention, il est aussi avantageux que la masse de matière isolante maintenant la partie de contact ait la forme d'une pièce façonnée séparée, pouvant être logée dans le trou de rivetage et présentant une tête et un alésage central. Cette pièce façonnée peut être fabriquée par usinage au tour, par moulage sous pression ou par des procédés analogues. A titre de matière isolante, on utilise de préférence une matière plastique résistant à la chaleur, par exemple du Teflon ou du Duroplast, pour n'en citer que deux. La dimension extérieure de la pièce façonnée en substance cylindrique est adaptée au diamètre intérieur du rivet d'une manière telle que l'on puisse enfoncer la pièce façonnée en matière plastique facilement à la main dans le rivet. Ceci ne signifie pas qu'une opération manuelle doit toujours être utilisée lors de la fabrication mais indique simplement approximativement le degré des tolérances. Dans un système automatique, la masse de matière isolante ayant la forme de ces pièces façonnées préfabriquées séparément, est introduite dans les rivets un à un par le haut, c'est-à-dire du côté de la tête des rivets, et y est enfoncée au point que la tête de la pièce façonnée vienne buter contre la tête du rivet.

Au lieu d'introduire la partie de contact dans l'alésage préfabriqué de la pièce façonnée, comme dans la forme d'exécution préférée ici décrite, on peut aussi l'enrober par pulvérisation de la masse de matière isolante ou bien on peut, pendant l'opération de pulvérisation ou de façonnage, introduire la partie de contact puis la sceller par pulvérisation ou par façonnage. On dispose donc de nombreuses possibilités de fabrication différentes en exploitant tous les avantages constructifs et fonctionnels du capteur conforme à l'invention.

A titre de connexion électrique, on utilise conformément à l'invention avantageusement un soulier de câble, une connexion à broche, une connexion vissée ou une connexion serrée.

D'autres avantages, particularités et possibilités d'utilisation de l'invention ressortiront clairement de la description détaillée donnée ci-après avec référence au dessin annexé dans lequel:

la Fig. 1 est une vue en coupe arrachée d'une partie d'un tambour de frein, d'une garniture de frein et d'une mâchoire de frein, dans laquelle le dispositif capteur conforme à l'invention est incorporé, et

la Fig. 2 est une vue en coupe de la pièce façonnée séparée en matière isolante destinée à maintenir la partie de contact.

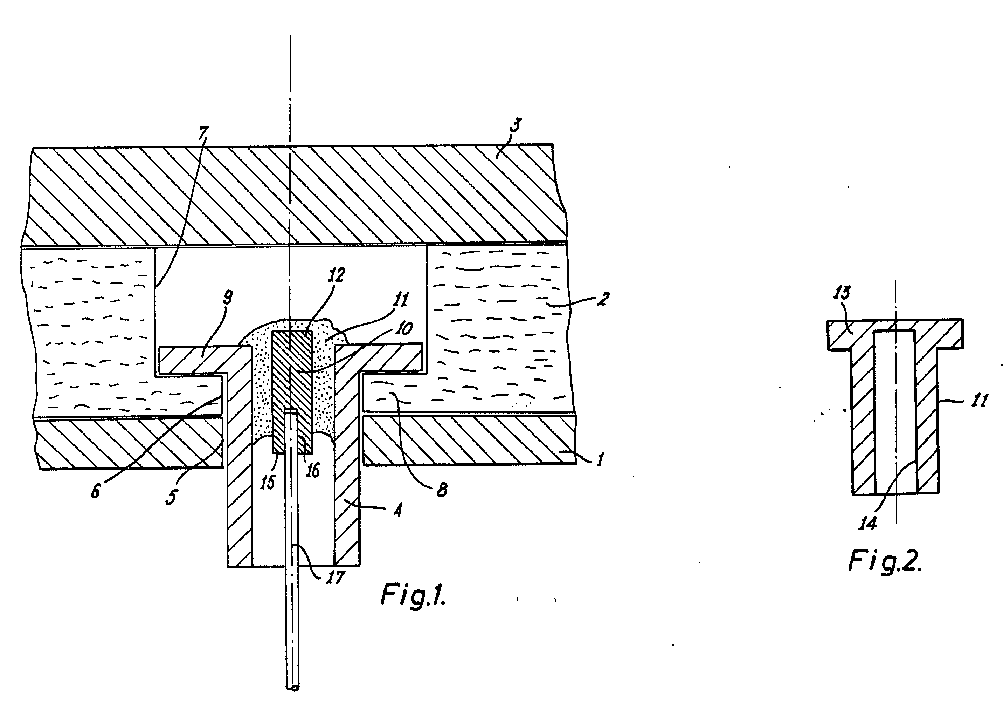

Sur la mâchoire de frein 1 représentée schématiquement en coupe transversale sur la Fig. 1 est placée la garniture de frein 2 et cette garniture est entourée extérieurement par le tambour de frein 3. La
vue en coupe de la Fig. 1 est prise à l'endroit où la
garniture de frein 2 doit être fixée à la mâchoire de
frein 1 au moyen d'un rivet 4. A cet effet, la mâchoire
de frein 1 présente un trou 5 qui est en ligne avec le
trou 6 prévu dans la garniture de frein 2. A ce trou
se raccorde le contre-alésage 7 dont le diamètre est
supérieur à celui du trou 6. Ce raccordement forme la
plage de rivetage 8 qui sert à supporter le rivet 4. La
tête 9 du rivet est posée sur la plage de rivetage 8 de
la garniture de frein 2.

Dans la zone voisine de la tête 9 du rivet est
prévue une partie de contact 10 en métal de forme cylindrique dont la paroi externe est espacée de la paroi
interne du rivet. La partie de contact 10 est en outre
maintenue par la masse de matière isolante 11 qui est
disposée dans l'espace intermédiaire entre la paroi
interne du rivet 4 et la surface externe de la partie
de contact 10. Comme le montre le dessin, l'extrémité
supérieure 12 de la partie de contact 10 ressort par
exemple de 1 à 2 mm au-dessus de la face supérieure de
la tête 9 du rivet. Cette extrémité supérieure 12
n'est cependant pas en métal nu dans l'alésage 7 mais
est coiffée par la masse de matière isolante 11. Dans
la forme d'exécution représentée sur la Fig. 1, on recourt à cet effet à une opération de coulée qui permet
de façonner la masse de matière isolante 11 tout autour
de la partie de contact 10.

L'autre forme d'exécution décrite plus haut
qui consiste à façonner la masse de matière isolante 11
sous la forme d'une pièce façonnée distincte est illustrée sur la Fig. 2. La totalité de la pièce façonnée
doit à nouveau être considérée comme masse de matière
isolante 11. Elle présente à son extrémité supérieure
une tête 13 et un alésage central 14. Lorsque, pendant
la fabrication, on a introduit cette pièce façonnée séparée formant masse de matière isolante 11 dans le ri-

0015889

vet 4 avec la tolérance nécessaire, on peut introduire la partie de contact 10 par le bas dans l'alésage central 14.

La partie de contact 10 peut par exemple avoir la forme représentée sur la Fig. 1. Dans ce cas-ci, elle est massive et présente à son extrémité inférieure 15 un alésage 16 avec un pas de vis intérieur dans lequel un câble de connexion 17 présentant à sa partie supérieure un soulier de maintien fileté est vissé (non représenté dans ce cas-ci). D'autres modes de fixation possibles et équivalents du câble de connexion 17 à la pièce de contact 10 ont déjà été décrits plus haut.

Lorsque à la suite d'un service prolongé, le tambour de frein 3 a usé la garniture de frein 2 au point que la surface de travail supérieure de la garniture de frein 2 se trouve environ 2 à 4 mm au-dessus de la tête 9 du rivet, la masse de matière isolante 11 qui se trouve sur l'extrémité supérieure 12 de la partie de contact 11 commence à s'user sans qu'au début la lampe prévue sur le tableau de bord du véhicule pour indiquer le degré d'usure déterminé ne s'allume. Cette lampe s'allume toutefois au moment où le recouvrement formé par la masse de matière isolante 11 prévue sur l'extrémité supérieure 12 de la partie de contact 10 est éliminé au point que le tambour de frein 3 vienne en contact électrique avec cette partie de contact 10. Le circuit est maintenant fermé par l'intermédiaire du tambour de frein, de la partie de contact 10, du câble de connexion 17 etc. et la lampe témoin prévue sur le tableau de bord du véhicule s'allume.

0015889

<u>R E V E N D I C A T I O N S</u>

1.- Dispositif servant à produire un signal de mesure pour indiquer l'usure d'une garniture de frein qui est fixée sur une mâchoire de frein au moyen de rivets, les rivets, noyés dans la garniture de frein, étant posés sur la plage de rivetage, caractérisé en ce que le capteur comprend un rivet (4) dans lequel est prévue, près de sa tête (9), une partie de contact (10) qui est maintenue dans une masse de matière isolante (11) et l'extrémité supérieure (12) de la partie de contact (10) fait saillie au-dessus de la tête (9) du rivet et est couverte par la masse de matière isolante (11).

2.- Dispositif suivant la revendication 1, caractérisé en ce que la partie de contact (10) est en métal, a en substance la forme d'un cylindre dont le diamètre est inférieur au diamètre intérieur du rivet (4) et comporte, à son extrémité inférieure (15) opposée à la tête (9) du rivet, des moyens de connexion électriques (16, 17).

3.- Dispositif suivant la revendication 1 ou 2, caractérisé en ce que la partie de contact (10) a la forme d'une douille métallique dans l'extrémité inférieure (15) de laquelle est prévu un pas de vis (16).

4.- Dispositif suivant l'une quelconque des revendications 1 à 3, caractérisé en ce que le moyen de connexion électrique, à l'extrémité inférieure (15) de la partie de contact (10), présente un adaptateur ayant la forme d'une broche dont une extrémité (supérieure) est pourvue d'un pas de vis extérieur et dont l'autre extrémité (inférieure) est pourvue d'un connexion électrique (17).

5.- Dispositif suivant l'une quelconque des revendications 1 à 4, caractérisé en ce que la masse de matière isolante (11) qui maintient la partie de contact (10) a la forme d'une pièce façonnée séparée comportant une tête (13) et un alésage central (14) et

8

0015889

pouvant être logée dans le trou de rivetage.

Bruxelles, le 7 mars 1980
DON INTERNATIONAL S.A. société anonyme
G.C. PLUCKER.

0015889

-1/1-

Fig.2.

11 13 14

Fig.1.

1 2 3 4 5 6 7 8 9 10 11 12 15 16 17

## Office européen des brevets

### RAPPORT DE RECHERCHE EUROPEENNE

EP 80 87 0017

| Catégorie | Citation du document avec indication, en cas de besoin, des parties pertinentes | Revendica-tion concernée | CLASSEMENT DE LA DEMANDE (Int. Cl.3) |
|---|---|---|---|
| | **DOCUMENTS CONSIDERES COMME PERTINENTS** | | |
| | FR - A - 2 107 232 (BENDIX) <br> * document entier * <br> & DE - A - 2 144 466 <br> -- | 1,2 | F 16 D 66/02 |
| | FR - A - 1 457 672 (RENAULT) <br> * en entier * <br> -- | 1,2 | |
| | DE -A - 2 420 449 (SAB BRAKE REGU-LATOR) <br> * fig. 1 * <br> -- | 1,2 | **DOMAINES TECHNIQUES RECHERCHES (Int. Cl.3)** |
| | DE - A1 - 2 407 517 (KRUPP) <br> * page 2, ligne 17 à page 4, ligne 27; fig. 1 * <br> -- | 1-3, 5 | F 16 D 66/00 |
| A | DE - U - 1 994 885 (D.B.A.) <br> -- | | |
| A | DE - U - 1 968 888 (TEVES) <br> -- | | |
| A | US - A - 3 716 832 (GORGIE et al.) <br> -- | | |
| A | US - A - 3 660 815 (REES) <br> ---- | | **CATEGORIE DES DOCUMENTS CITES** <br> X: particulièrement pertinent <br> A: arrière-plan technologique <br> O: divulgation non-écrite <br> P: document intercalaire <br> T: théorie ou principe à la base de l'invention <br> E: demande faisant interférence <br> D: document cité dans la demande <br> L: document cité pour d'autres raisons |
| | Le présent rapport de recherche a été établi pour toutes les revendications | | &: membre de la même famille, document correspondant |

| Lieu de la recherche | Date d'achèvement de la recherche | Examinateur |
|---|---|---|
| Berlin | 23-05-1980 | LUDWIG |

OEB Form 1503.1 06.78